# EUROPÄISCHE PATENTSCHRIFT

(11) **EP 2 278 204 B1**
(45) Veröffentlichungstag und Bekanntmachung des Hinweises auf die Patenterteilung: **28.11.2012**
(21) Anmeldenummer: 10169720.9
(22) Anmeldetag: 15.07.2010
(51) Int. Cl.: F16L 25/00

(54) **Wellrohranschlussverschraubung**
Screw connection for corrugated pipe
Raccord à vis pour tuyau ondulé

(30) Priorität: 17.07.2009 DE 202009005038 U; 02.06.2010 EP 10164747
(43) Veröffentlichungstag der Anmeldung: 26.01.2011
(73) Patentinhaber: Beulco GmbH & Co. KG, 57439 Attendorn (DE)
(72) Erfinder: Pülmanns, Gerhard, 47918 Tönisvorst (DE); Nies, Christoph, 57080 Siegen (DE); Monse, Franz-Josef, 57439 Attendorn (DE)
(74) Vertreter: Haverkamp, Jens

(56) Entgegenhaltungen:
- EP-A1- 1 605 196
- WO-A1-97/42442
- WO-A2-2006/004720
- DE-U1-202006 013 841
- DE-U1-202007 017 589
- US-A1- 2004 155 463

## Beschreibung

Die Erfindung betrifft eine Wellrohranschlussverschraubung mit den Merkmalen des Oberbegriffs des Anspruchs 1.

Bei Wellrohren handelt es sich typischerweise um Metallrohre, beispielsweise aus Stahl, auch aus Edelstahl oder Kupfer. Eingesetzt werden derartige Rohre zur Kompensation von Längen- und/oder Winkeländerungen, etwa in der Solartechnik zwischen einem Solarmodul und einer Wärmepumpe. Aus DE 20 2006 013 841 U1 ist ein als Schraubverbinder konzipierter Wellrohrverbinder bekannt, bei dem zum Abdichten des Wellrohres gegenüber dem Grundkörper des Verbinders eine Verformung des freien Endes des Wellrohres zum Erzielen einer metallischen Dichtung vorgesehen ist. Zu diesem Zweck verfügt dieser vorbekannte Wellrohranschlussverbinder über einen aus zwei Schalen gebildeten Rückhaltekörper, an dessen Innenseite eine abragende Verklammerungsrippe als Mitnehmer angeformt ist. Diese Verklammerungsrippe dient zum Eingreifen in das auf das Ende des Wellrohres folgende erste Tal des Wellrohres. Auf diese Weise ist dieser Rückhaltekörper formschlüssig in längsaxialer Richtung wirkend an ein Wellrohr anschließbar. Mittels einer Überwurfmutter wird der an dem Wellrohr befindliche Rückhaltekörper mit dem Grundkörper verschraubt. Dabei wird der erste Scheitel des Wellrohres gegen einen als erste Klemmfläche dienenden Dichtkonus des Grundkörpers zum Erstellen der metallischen Dichtung gepresst und in dieser Richtung zusammengedrückt, mithin umgeformt. Zu diesem Zweck verfügt der aus zwei Schalen gebildete Rückhaltekörper, der, wenn an das Wellrohr angeschlossen, als Klemmring angesprochen werden kann, über eine zweite Klemmfläche.

Aus WO 97/42442 A1 ist eine weitere Wellrohranschlussverschraubung bekannt geworden, die vom Wirkungsprinzip her aufgebaut, wie die zuvor beschriebene. Im Unterschied zu dieser verfügt die aus WO 97/42442 A1 bekannt gewordene Wellrohranschlussverschraubung über einen einstückigen Klemmring, der auf das freie Ende des Wellrohres aufgeschoben wird. In Richtung zum Grundkörper weisend verfügt dieser Klemmring über mehrere einzelne, jeweils durch einen Spalt voneinander getrennte Klemmringsegmente mit einem zum Eingreifen in ein Tal des Wellrohres vorgesehenen Mitnehmer. Die Klemmringsegmente sind in radialer Richtung elastisch bewegbar, so dass unter Ausnutzung dieser elastischen Eigenschaften ein Wellrohr durch die Anordnung der Klemmringsegmente hindurchgeschoben werden kann. Eine Überwurfmutter als Spanneinrichtung fasst die Klemmringsegmente des Klemmringes ein, der mit seinem die Klemmringsegmente zusammenhaltenden Abschnitt aus dem rückseitigen Abschluss der Überwurfmutter herausragt. Die Klemmringsegmente verfügen jeweils über einen Stellkopf, der an einer Stellkulisse der Überwurfmutter anliegt. Die Stellkulisse ist zum wellrohrseitigen Abschluss der Überwurfmutter hin geneigt ausgebildet, damit beim Aufschrauben der Überwurfmutter auf den Grundkörper die Klemmringsegmente mit ihren Mitnehmern in radialer Richtung in ein Tal des Wellrohres eingepresst werden. Die Stellkulisse setzt sich in eine Widerlagertasche zur Aufnahme des rückwärtigen Abschnitts des Stellkopfes fort, wodurch die Klemmringsegmente das notwendige Widerlager zum Ausüben der zum Erstellen der gewünschten metallischen Dichtung aufzubringenden Kraft erfährt. Vorteilhaft ist bei dieser Wellrohranschlussverschraubung, dass der Klemmring einstückig konzipiert ist, wodurch seine Handhabung der Einzelteile vereinfacht ist. Allerdings ist bei dem Aufschieben des Klemmringes darauf zu achten, dass der Klemmring nur so weit auf das Wellrohr aufgeschraubt wird. Wird der Klemmring unbemerkt zu weit auf das Wellrohr aufgeschoben, besteht die Gefahr, dass trotz Spannens der Überwurfmutter die gewünschte metallische Dichtung unbemerkt nicht oder nicht vollständig erreicht wird.

Eine Wellrohranschlussverschraubung gemäß dem Oberbegriff des Anspruchs 1 ist aus EP 1 605 196 A1 bekannt. Diese Wellrohranschlussverschraubung zeichnet sich dadurch aus, dass der Grundkörper einen den Durchgangskanal des Grundkörpers einfassenden Mündungsvorsprung aufweist, dessen in radialer Richtung nach außen geneigte Fläche die Dichtfläche darstellt, gegen die die vordere Wand eines Wellenberges eines Wellrohrs angepresst wird. Zudem ist mit dieser Wellrohranschlussverschraubung vorgesehen, dass der Grundkörper eine Anschlagfläche für den Klemmring aufweist, an der dieser in einem ersten Schritt des Aufschraubens der Überwurfmutter auf den Grundkörper anliegt. Dieses dient dem Zweck, dass in einer ersten Aufschraubphase der Klemmring nicht axial mitbewegt wird, sondern ausschließlich eine Durchmesserverringerung erfährt. Während dieser Durchmesserverringerung wird der Mitnehmer des Klemmringes in ein Wellental eingeführt. Erst wenn der Durchmesser des Klemmringes soweit verringert worden ist, dass die Abstützanordnung an der grundkörperseitigen Anschlagfläche nicht mehr wirkt, wird dieser mit seinem in das Wellenteil eingreifenden Klemmring in axialer Richtung mit weiterer Aufschraubbewegung in Richtung zum Grundkörper bewegt. Im Zuge dieser Bewegung wird der erste Wellenberg zwischen dem Mitnehmer des Klemmringes und der Dichtfläche an der Außenseite des Mündungsvorsprunges des Grundkörpers verformt. Die sich einstellende Dichtwirkung erstreckt sich in radialer Richtung vom dem Scheitel bis zum radialen inneren Abschluss des Mitnehmers. Um eine hinreichende Dichtwirkung zu erzielen, ist eine entsprechende Kraftbeaufschlagung erforderlich.

Ausgehend von diesem diskutierten Stand der Technik liegt der Erfindung daher die Aufgabe zugrunde, eine Wellrohranschlussverschraubung mit den Merkmalen des Oberbegriffs des Anspruchs 1 dergestalt weiterzubilden, dass nicht nur die Handhabung der Wellrohranschlussverschraubung bei der Montage eines Wellrohres einfach gehalten ist, sondern zudem die Ausbildung der Dichtung zwischen Wellrohr und Grundkörper verbessert ist.

Diese Aufgabe wird erfindungsgemäß durch eine Wellrohranschlussverschraubung mit den Merkmalen des Anspruchs 1 gelöst.

Diese Wellrohranschlussverschraubung verfügt über einen konzentrisch zu der grundkörperseitigen Klemmfläche - der ersten Klemmfläche - angeordneten Stellkörper, wobei zwischen diesem und der Klemmfläche eine umlaufende Klemmringnut vorgesehen ist. Diese dient zur Aufnahme des vorderen, zum Grundkörper weisenden Abschnittes des Klemmringes, der sich, wenn mit seinem vorderen Abschnitt in diese eingreifend, mit seiner Außenseite an einer als Widerlager dienenden Nutenwand der Klemmringnut - einer Widerlagerfläche - abstützt. Damit der vordere Abschnitt des Klemmringes in die Klemmringnut eingeführt werden kann, ist dessen Materialstärke im Bereich seines vorderen Abschnittes geringer als die lichte Weite zumindest des Mündungsbereiches der Klemmringnut. Durch die grundkörperseitige Anordnung des Stellkörpers mit seinem auf die Außenseite des Klemmringes in seinem vorderen Abschnitt wirkenden Widerlager wirkt über die Klemmfläche des Klemmringes auf einen zwischen beiden Klemmflächen angeordneten Scheitel eines Wellrohres nicht nur eine aus der Betätigung der beispielsweise als Überwurfmutter konzipierten Spanneinrichtung in Richtung zum Grundkörper weisende Klemmkraftkomponente, sondern vielmehr bei entsprechender Ausgestaltung des Klemmringes eine durch das Widerlager des Stellkörpers dieser sogar im gewissen Maße Entgegengerichtete, sobald der vordere Abschnitt des Klemmringes in die Klemmringnut eingeführt ist. Bei der beanspruchten Wellrohranschlussverschraubung erfährt der Klemmring eine nicht unerhebliche radiale Klemmkraftkomponente mit dem Ergebnis, dass auf den zwischen den beiden Klemmflächen befindlichen Wellrohrscheitel Klemmkräfte aus radialen Richtungen wirken. Aufgrund des Vorsehens der ersten Klemmfläche an der Außenseite eines den Durchgangskanal einfassenden Mündungsvorsprunges wird der zwischen den Klemmflächen eingeklemmte Scheitel durch eine nicht im Wesentlichen axiale Klemmkraft verklemmt. Bei dieser Wellrohranschlussverschraubung steht die Umformung des zwischen den beiden Klemmflächen befindlichen Wellrohrscheitels zum Ausbilden einer metallischen Dichtung im Vordergrund. Dabei ist vorgesehen, dass die über den Klemmring aufgebrachte Klemmkraft auf den zwischen den beiden Klemmflächen befindlichen Scheitel bzw. scheitelnahen Bereich konzentriert ist. Durch die Konzentration der angelegten Kraft auf die Umformung des Scheitels gelingt dieses jedoch mit den üblichen, zur Verfügung stehenden Kräften. Die vorbeschriebene Kraftkonzentration als Spannungsspitze begünstigt das Ausbilden einer metallischen Dichtung in diesem Bereich.

Der Stellkörper dieser Wellrohranschlussverschraubung verfügt über einen Anschlag für den vorderen, zum Grundkörper weisenden Abschluss des Klemmringes, an welchem Anschlag der Klemmring mit seiner vorderen Stirnseite anliegt, bevor die Spanneinrichtung zum Einspannen des Endes des daran angeschlossenen Wellrohres betätigt wird. Durch diesen Anschlag ist der Klemmring, wenn die Spanneinrichtung, beispielsweise die Überwurfmutter in axialer Richtung in Richtung zum Grundkörper bewegt wird, von der axialen Bewegung entkoppelt, so dass während des Aufschraubens der Überwurfmutter für einen bestimmten Bewegungsabschnitt die Überwurfmutter ohne Mitnahme des Klemmringes in axialer Richtung zum Grundkörper hin bewegt wird. In dieser Anschlaganordnung zwischen Klemmring und Stellkörper wird, wie nachstehend beschreiben, bei einer axialen Bewegung der Spanneinrichtung der Durchmesser des Klemmringes verringert. In Folge der vorbeschriebenen Bewegungsentkopplung kann der Prozess des Zusammendrückens eines zwischen den beiden Klemmflächen befindlichen Scheitels eines Wellrohres in Abhängigkeit von der relativen Anordnung von Spanneinrichtung und Klemmring zueinander gesteuert werden, und zwar der Gestalt, dass im Zuge des Spannens der Spanneinrichtung zunächst der Klemmring mit seinem Mitnehmer in ein Wellental eingebracht wird, ohne dass in dieser ersten Phase die beiden Klemmflächen aufeinander zu bewegt werden. Eine axiale Bewegung des Klemmringes erfolgt erst, wenn der Mitnehmer hinreichend tief in ein Wellental eingebracht worden ist und sodann die zum Zusammendrücken eines Scheitels vorgesehenen Klemmflächen ihre bestimmungsgemäße Raumlage zueinander eingenommen haben. Ist durch eine solche, den Innendurchmesser des Klemmringes reduzierende Bewegung die vordere Stirnfläche des Klemmringes von dem Anschlag des Stellkörpers in radialer Richtung nach innen weggeführt worden, wird bei weiterem Betätigen der Spanneinrichtung der Klemmring zum Zusammendrücken des zwischen den Klemmflächen befindlichen Scheitels in Richtung zu dem Grundkörper bewegt. Im Zuge dieser Bewegung wird sein vorderer Abschnitt in die Klemmringnut eingeführt. Daher ist bei dieser Wellrohranschlussverschraubung in besonderem Maße Sorge dafür getragen, dass die Deformation eines Wellrohrscheitels zum Erstellen der gewünschten metallischen Dichtung erst dann beginnt, wenn die zusammenwirkenden Klemmflächen ihre hierfür bestimmungsgemäße Raumlage zueinander eingenommen haben. Auch durch diese Maßnahme ist die Sicherheit des Erstellens der gewünschten metallischen Dichtung verbessert.

Das Besondere an der beanspruchten Ausgestaltung ist, dass der Klemmring eine längsaxiale Erstreckung ausgehend von seinem Mitnehmer aufweist, die einen an seiner Klemmfläche umzuformenden Scheitel eines Wellrohres in Richtung zum Grundkörper hin übergreift. Als Klemmring dient vorzugsweise ein durch einen Schlitz geöffneter Ringkörper. Dieser ist gemäß einer Ausgestaltung in einer Klemmringkammer der vorzugsweise als Überwurfmutter konzipierten Spanneinrichtung gehalten. Damit sind bei einer solchen Ausgestaltung nur zwei Teile der Wellrohranschlussverschraubung zu handhaben, namentlich der Grundkörper und die Überwurfmutter, in der der Klemmring unverlierbar gehalten ist. Dabei kann vorgesehen sein, dass der Klemmring innerhalb der Klemmringkammer der Spanneinrichtung so weit aufgeweitet gehalten ist, dass die typischerweise als Spanneinrichtung dienende Überwurfmutter, ohne den Klemmring aufweiten zu müssen, auf das anschlussseitige Ende eines Wellrohrs aufgeschoben werden kann. Daneben besteht auch die Möglichkeit, den Innendurchmesser des Klemmringes so zu konzipieren, dass dieser beim Einschieben eines Wellrohres durch die dann im Durchmesser etwas größeren Scheitel geringfügig aufgeweitet wird, um einem Monteur eine haptische Rückmeldung darüber zu geben, wann sich der Mitnehmer des Klemmringes in einem Wellental befindet.

Durch die Konzeption der Wellrohranschlussverschraubung mit ihrem Stellkörper und den dem Stellkörper zugehörigen Anschlag ist es unerheblich, wie weit die Überwurfmutter mit dem darin aufgenommenen Klemmring auf das freie Ende des Wellrohres aufgeschoben wird, bevor diese mit dem Grundkörper durch Aufschrauben in Eingriff gestellt wird. Im Zuge des bei Vorsehen einer Überwurfmutter als Spanneinrichtung durchgeführten Aufschraubbewegung wird der Klemmring zum Zusammendrücken des umzuformenden Scheitels erst dann aktiviert wird, wenn die daran beteiligten Elemente der Wellrohranschlussverschraubung ihre bestimmungsgemäße Anordnung zueinander eingenommen haben.

Weitere Vorteile und Ausgestaltungen der Erfindung ergeben sich aus der nachfolgenden Beschreibung eines Ausführungsbeispieles unter Bezugnahme auf die beigefügten Figuren. Es zeigen:
- **Fig. 1:**: eine Wellrohranschlussverschraubung dargestellt nach Art einer Explosionsdarstellung mit einem anzuschließenden Wellrohr,
- **Fig. 2:**: die Wellrohrverschraubung der Figur 1 in einem Längsschnitt in einer ersten Montagestellung der Einzelteile zueinander,
- **Fig. 3:**: eine vergrößerte Ausschnittsdarstellung der miteinander in Ein- griff gestellten Einzelteile der Wellrohrverschraubung der Figur 2 in einer weiteren Montagestellung,
- **Fig. 4:**: die Wellrohrverschraubung mit dem bestimmungsgemäß daran angeschlossenen Wellrohr in einer Darstellung entsprechend Figur 3,
- **Fig. 4a:**: die Darstellung der Figur 4 des metallisch abgedichteten ange- schlossenen Wellrohrendes darstellend die Krafteinleitungsrich- tung,
- **Fig. 5:**: eine Wellrohrverschraubung gemäß einer weiteren Ausgestal- tung in einem Teillängsschnitt und
- **Fig. 6:**: eine Wellrohrverschraubung entsprechend derjenigen der Figur 5 in einer anderen Ausgestaltung seiner Spanneinrichtung in einem Teillängsschnitt.

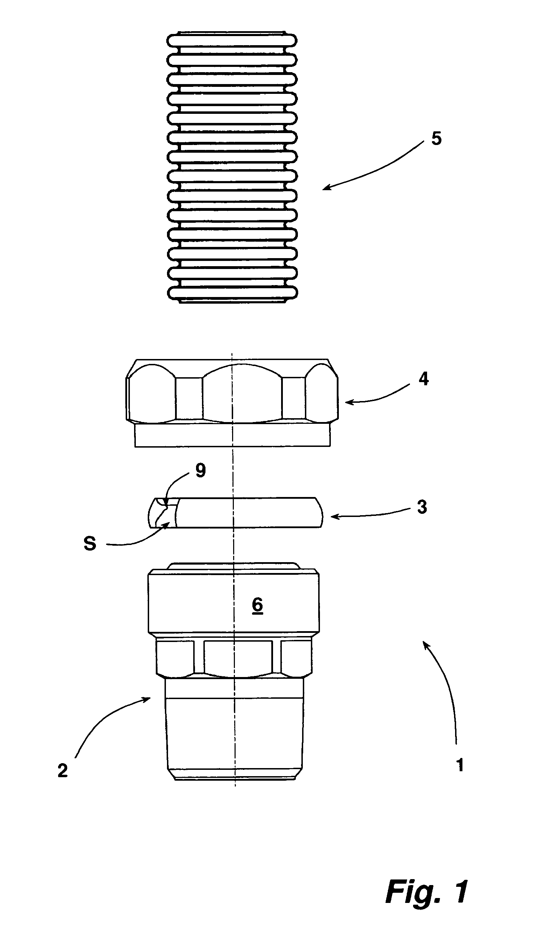

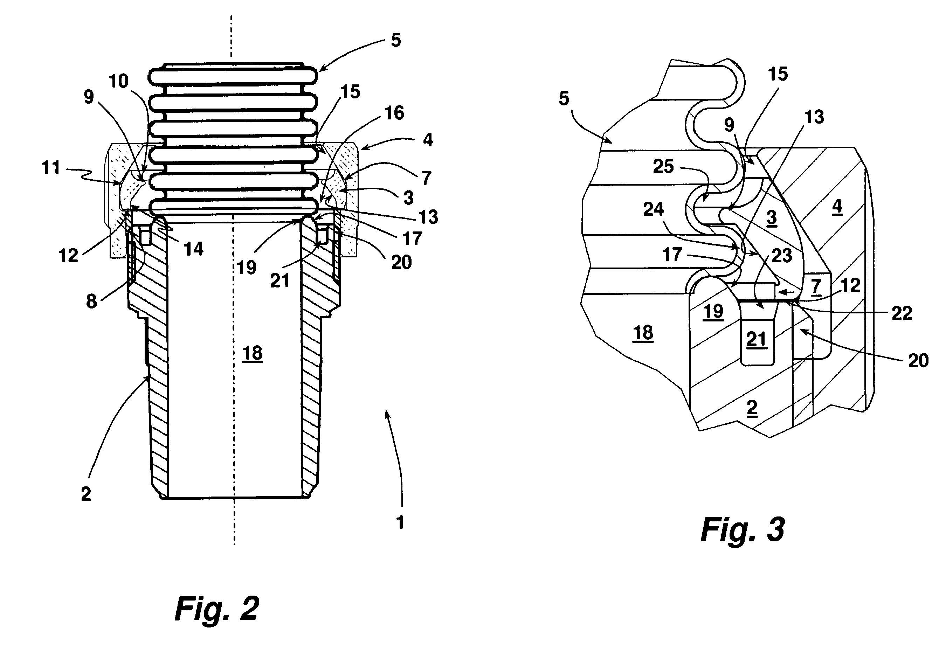

Eine Wellrohranschlussverschraubung 1 umfasst einen Grundkörper 2, einen Klemmring 3 sowie eine Überwurfmutter 4 als Spanneinrichtung. Der Grundkörper 2 ist typischerweise Teil einer Installation, an die ein Wellrohr 5 angeschlossen werden soll. Der Grundkörper 2 trägt anschlussseitig und somit zum Wellrohr 5 weisend ein Außengewinde 6, auf das die Überwurfmutter 4 mit ihrem Innengewinde aufschraubbar ist. Der Klemmring 3 ist, wie aus der Darstellung der Figur 2 erkennbar, in einer Vormontagestellung innerhalb einer Klemmringkammer 7 der Überwurfmutter 4 gehalten. Der Klemmring 3 ist ein durch einen Schlitz S geöffneter Ringkörper nach Art eines Sprengringes (siehe Figur 1), der in radialer Richtung eine gewisse Elastizität aufweist. Auf diese Weise ist der Klemmring 3 durch das Innengewinde 8 der Überwurfmutter 4 hindurch in die Klemmringkammer 7 einsetzbar, in der sich der Klemmring 3 aufgrund seiner elastischen Eigenschaften aufweitet und fortan in dieser unverlierbar gehalten ist. Typischerweise wird die Überwurfmutter 4 mit dem in ihrer Klemmringkammer 7 enthaltenen Klemmring 3 geliefert werden. Ist der Grundkörper 2 bereits Teil einer Installation, sind somit von einem Monteur zum Anschließen des Wellrohres 5 an die Installation nur die Überwurfmutter 4 und das freie Ende des Wellrohres 5 zu handhaben.

Der Klemmring 3 trägt einen in radialer Richtung nach innen vorspringenden Wulst als Mitnehmer 9. Dieser dient zum Eingreifen in ein Tal des anzuschließenden Wellrohrs 5. Die zu dem Wellrohr 5 weisende Seite 10 des Klemmringes 3 ist gekrümmt und kann als Stellfläche zum Einschieben des freien Endes des Wellrohres 5 dienen, sollte der Klemmring 3 im Unterschied zu der Darstellung in den Figuren weniger aufgeweitet sein. Bei dem dargestellten Ausführungsbeispiel ist der Klemmring 3 konzipiert, dass der durch den Mitnehmer 9 begrenzte Innendurchmesser des Klemmringes 3 größer als der maximale Außendurchmesser des Wellrohrs 5 ist. Die in radialer Richtung nach außen weisende Seite 11 des Klemmringes 3 ist konvex gekrümmt. In Richtung zum Grundkörper 2 verfügt der Klemmring 3 über eine Anschlagfläche 12. Die an den Mitnehmer 9 grenzende, geneigt in Richtung zu dem Grundkörper 2 weisende Fläche dient als Klemmfläche 13. Die Klemmfläche 13 geht über in einen zylindrischen Flächenabschnitt 14, der wiederum winklig an die Anschlagfläche 12 grenzt.

Bei der als Spanneinrichtung dienenden Überwurfmutter 4 dient eine zur Längsachse derselben geneigt angeordnete, sich konisch zum rückwärtigen Ausgang der Überwurfmutter 4 hin verjüngende Stellfläche 15 zur wellrohrausgangsseitigen Begrenzung der Klemmringkammer 7.

Der Grundkörper 2 verfügt an seinem wellrohrseitigen Anschluss 16 über eine Klemmfläche 17, die Teil eines den Durchgangskanal 18 einfassenden Mündungsvorsprunges 19 ist. Der Mündungsvorsprung 19 ist in Richtung zum Wellrohr 5 weisend gerundet ausgebildet, wobei die Klemmfläche 17 zur Längsachse des Grundkörpers 2 geneigt ist und sich an der nach außen weisenden Seite des Mündungsvorsprunges 19 befindet. Bei dem dargestellten Ausführungsbeispiel ist vorgesehen, dass die Neigung der Klemmfläche 17 gegenüber der Längsachse der Anschlussverschraubung mit einem größeren Winkel geneigt ist als die Klemmfläche 13 des Klemmringes 3. Infolge dessen ist zwischen den beiden Klemmflächen 13, 17 ein sich zum Inneren hin verjüngender Klemmspalt ausgebildet. Konzentrisch zu dem Mündungsvorsprung 19 verfügt der Grundkörper 2 über einen ringförmigen Stellkörper 20, der konzentrisch zu dem Mündungsvorsprung 19 unter Belassung einer Klemmringnut 21 in radialer Richtung mit Abstand von dem Mündungsvorsprung 19 angeordnet ist. Der Stellkörper 20 verfügt über eine als Anschlag dienende, zu dem Klemmring 3 weisende Stirnfläche 22. In Richtung zu dem Mündungsvorsprung 19 an die Stirnfläche 22 angrenzend verfügt der Stellkörper 20 über eine Widerlagerfläche 23. Die lichte Weite der Mündung der Klemmringnut 21 ist größer als die Materialstärke des Klemmringes 3 im Bereich seines verjüngten vorderen, die Anschlagfläche 12 tragenden Abschlusses. Bei entsprechender Anordnung des Klemmringes 3 kann dieser somit mit seinem vorderen, den Flächenabschnitt 14 umfassenden Abschnitt in die Klemmringnut 21 eingebracht werden. Die lichte Weite der Klemmnut 21 selbst entspricht dagegen im Wesentlichen der Materialstärke des Klemmringes 3 im Bereich seines vorderen Abschlusses.

Figur 2 zeigt die zum Anschließen des Wellrohres 5 an den Grundkörper 2 benötigten Einzelteile in einer ersten Montagestellung zueinander. Die Überwurfmutter 4 ist mit ihrem Innengewinde 8 auf das Außengewinde 6 des Grundkörpers 2 aufgeschraubt. In dieser Vormontagestellung, welches typischerweise die Auslieferungsanordnung der Einzelteile der Wellrohranschlussverschraubung 1 darstellt, wird anschließend das Wellrohr 5 mit seinem freien Ende eingesetzt. Dieser Zustand ist in Figur 2 gezeigt. Zum tatsächlichen Anschließen des Wellrohres 5 an die Wellrohranschlussverschraubung 1 wird im Folgenden die Überwurfmutter 4 in axialer Richtung zu dem Grundkörper 2 hin bewegt. Dabei wird in einer ersten Phase die als Anschlag dienende Stirnfläche 22 des Grundkörpers 2 an die Anschlagfläche 12 des Klemmringes 3 gebracht, wodurch dieser mit seiner gekrümmten Außenseite 11 an der innenliegenden Stellfläche 15 der Überwurfmutter 4 unter Verringerung seines Durchmessers verbunden mit einem Schließen des Schlitzes S entlangbewegt wird (vgl. Figur 3). Im Zuge dieser von dem Klemmring 3 in radialer Richtung ausgeführten Bewegung wird der Mitnehmer 9 in das sich an den ersten Scheitel 24 des Wellrohrs 5 anschließende Tal 25 eingebracht. Die Durchmesserverringerung des Klemmringes 3 ist somit bedingt durch seine Anlage an der geneigten Stellfläche 15 der Überwurfmutter 4 und deren axiale Bewegung in Richtung zum Grundkörper 2. Hierdurch wird der Klemmring 3 formschlüssig zur anschließenden Mitnahme des Wellrohres 5 an dieses angeschlossen. Während dieser ersten Anschraubphase der Überwurfmutter 4 auf den Grundkörper 2 wird der Klemmring 3 in axialer Richtung nicht bewegt, sondern , wie in Figur 3 durch die Pfeilrichtung angedeutet, nur hinsichtlich seines Durchmessers verringert. Diese radiale Bewegung vollzieht sich so lange, bis die Anschlagfläche 12 an der Stirnfläche 22 des Stellkörpers 20 des Grundkörpers 2 vorbeibewegt worden ist und sodann in einer zweiten Phase der vordere Abschnitt des Klemmringes 3 in die Klemmringnut 21 eingedrückt werden kann. Erst dann kann der Klemmring 3 in axialer Richtung zur Deformation des Scheitels 24 zwischen der ersten Klemmfläche 17 des Grundkörpers 2 und der zweiten Klemmfläche 13 des Klemmringes 3 bewegt werden, um die gewünschte metallische Dichtung zwischen der grundkörperseitigen Klemmfläche 17 und der Außenseite des Wellrohres 5 herbeizuführen. Die vorbeschriebene Bewegung des Klemmringes 3 macht deutlich, dass das maßgebliche Zusammendrücken des Scheitels 24 zwischen den beiden Klemmflächen 13, 17 erst erfolgt, wenn der Klemmring 3 eine Durchmesserverringerung erfahren hat und sich die beiden Klemmflächen 13, 17 in ihrer zum Herstellen der gewünschten Dichtung bestimmungsgemäßen Anordnung zueinander befinden.

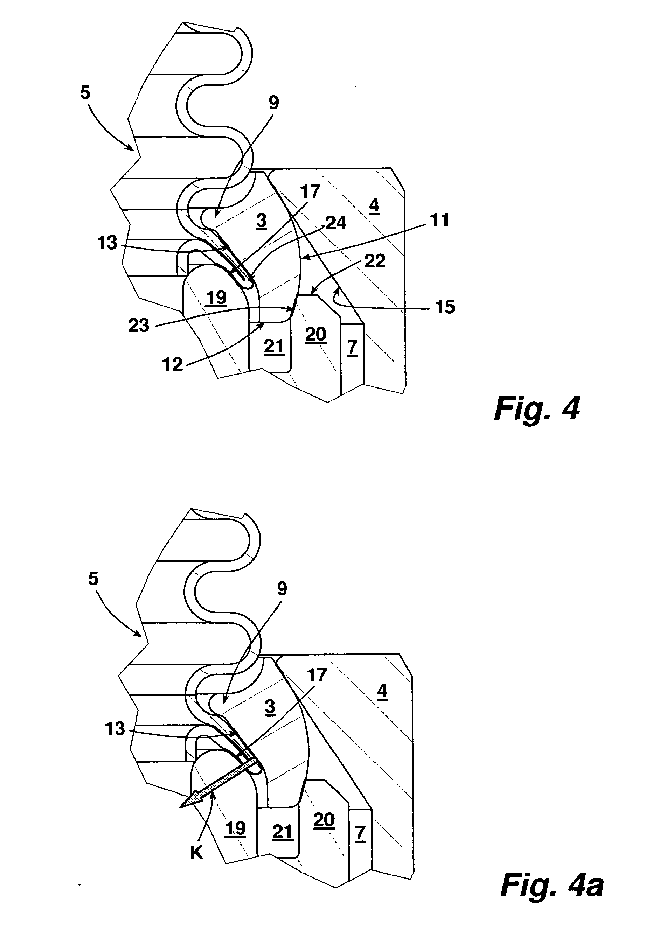

Figur 4 zeigt das an die Wellrohranschlussverschraubung 1 angeschlossene Wellrohr 5 mit seinem zum Herbeiführen einer metallischen Dichtung umgeformten Scheitel 24. Erkennbar ist der vordere Abschnitt des Klemmringes 3 in die Klemmringnut 21 eingeführt worden, wobei durch die Stellfläche 23 des Stellkörpers 20 ein besonderer Klemmdruck, und zwar auf den vorderen Abschnitt der Außenseite 11 des Klemmringes 3 ausgeübt wird. Die Darstellung der Figur 4 macht deutlich, dass bei dieser Ausgestaltung ein Klemmdruck auf den Klemmring 3 nicht nur durch die Stellfläche 15 der Überwurfmutter 4 und damit aus einer in Anschlussrichtung hinter dem Scheitel 24 liegenden Richtung erfolgt, sondern auch durch die Stellfläche 23, und zwar aus einer in Montagerichtung vor dem Scheitel 24 befindlichen Richtung. Die Folge ist, dass gerade im Bereich des Scheitels 24 besonders hohe maßgeblich radiale Klemmkräfte wirken, wodurch die gewünschte metallische Dichtung zwischen Grundkörper 2 und Wellrohr 5 ausgebildet worden ist. Dieses liegt an der vorbeschriebenen Abstützung des Klemmringes 3 und daran, dass die Klemmflächen 13, 17 nicht quer und damit rechtwinklig, sondern zur Längsachse der Wellrohranschlussverschraubung 1 spitzwinklig geneigt sind, wobei die grundkörperseitige Klemmfläche 17 sich an der Außenseite eines den Durchgangskanal 18 einfassenden Mündungsvorsprunges befindet. Deutlich erkennbar ist in Figur 4 die sich zum Scheitel 24 des Wellrohres 5 hin verjüngende Klemmspaltgeometrie zwischen den beiden Klemmflächen 13, 17.

Figur 4a zeigt die Anordnung der Figur 4, in die die Krafteinleitungsrichtung K eingetragen ist, mit der die Kraft von dem Klemmring 3 in den Scheitel 24 des Wellrohres 25 eingeleitet wird. Der Ort der höchsten Krafteinleitung befindet sich unmittelbar angrenzend an den Scheitel 24 des Wellrohres 5 und leitet die Klemmkraft in vornehmlich radialer Richtung in den Scheitel 24 ein. Deutlich erkennbar ist, dass der vektoriell radiale Anteil größer als der vektoriell axiale Anteil ist.

Bei dem dargestellten Ausführungsbeispiel ist vorgesehen, dass der zum Wellrohr 5 weisende Abschluss des Klemmringes 3 bündig oder in etwa bündig mit dem rückseitigen Abschluss der Überwurfmutter 4 abschließt. Wenn gewünscht, kann diese Fläche des Ringkörpers farblich markiert sein, so dass für einen Monteur das Erreichen des bestimmungsgemäßen Verschraubungsgrades ohne weiteres erkennbar ist. Überdies wird bei der vorbeschriebenen Konzeption für einen Monteur sichtbar, dass der Schlitz S im Zuge der Verschraubung vollständig oder zumindest im Wesentlichen vollständig geschlossen worden ist.

In einer zweckmäßigen Weiterbildung ist vorgesehen, dass die Neigung der klemmringseitigen Klemmfläche geringfügig weniger stark geneigt ist als die Neigung der grundkörperseitigen Klemmfläche an derjenigen Stelle, an der diese als Widerlager für die Umformung des Scheitels eines Wellrohrendes vorgesehen ist. Somit ist der sich zwischen den Klemmflächen befindliche Klemmspalt nach außen hin verjüngt vorgesehen. Bei dieser Konzeption ist eine Kraftkonzentration auf den Scheitel eines anzuschließenden Wellrohrendes verbessert, da sich der Scheitel des umzuformenden Wellrohrendes sodann immer in dem engsten Teil des zwischen den beiden Klemmflächen befindlichen Klemmspaltes angeordnet ist.

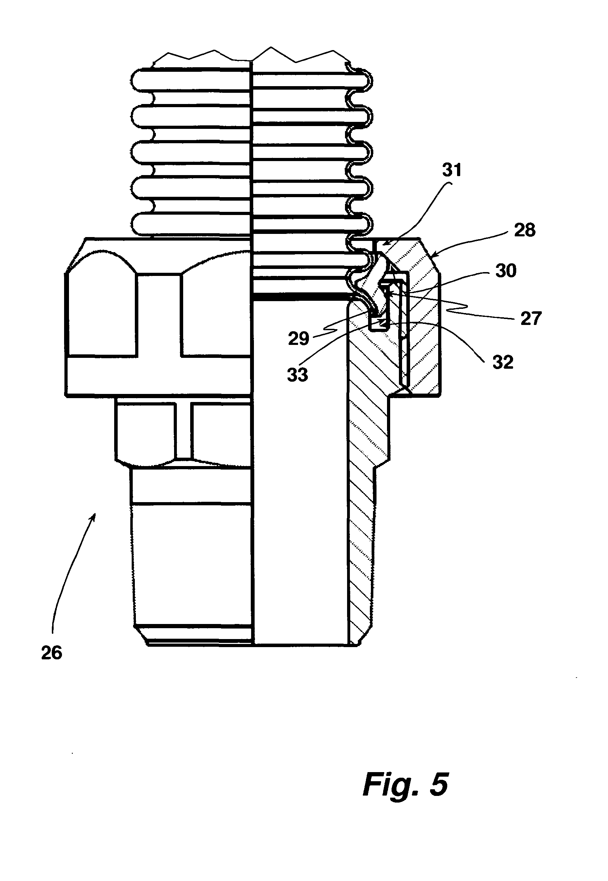

Figur 5 zeigt eine weitere Wellrohranschlussverschraubung 26, die prinzipiell ebenso aufgebaut ist wie die Wellrohranschlussverschraubung 1 der Figuren 1 bis 4. Die Wellrohranschlussverschraubung 26 unterscheidet sich von der Wellrohranschlussverschraubung 1 hinsichtlich der Ausgestaltung ihres Klemmringes 27 und des wellrohrausgangsseitigen Abschlusses der Überwurfmutter 28. Der Klemmring 27 ist bei diesem Ausführungsbeispiel spiegelsymmetrisch ausgebildet. Hierdurch sind Montagefehler vermieden. Die Überwurfmutter 28 trägt angrenzend an ihre konisch geneigte Stellfläche 30 einen nach innen vorspringenden Flansch 31, dessen innere, zum Grundkörper weisende Seite als rückwärtiger Anschlag für die rückwärtige Stirnfläche 32 des Klemmringes 27 dient. Liegt der Klemmring 27 an dem Flansch 31 an, erfährt der Klemmring 27 eine Verwindung mit der Folge, dass die auf den Scheitel des Wellrohres wirkenden radialen Kräfte vergrößert sind. Dieses ist durch die Abstützung des in die Klemmringnut 32 eingreifenden und sich an der Widerlagerfläche 33 des Stellkörpers abstützenden Klemmringabschnittes begründet.

Figur 5 zeigt das an die Wellrohranschlussverschraubung 26 angeschlossene Wellrohr. Bei diesem stellen sich dieselben und im Falle einer Verwindung, wie vorbeschrieben, zudem verstärkt in radialer Richtung wirkenden Klemmkräfte, wie dieses zu dem Ausführungsbeispiel der Figuren 1 bis 4 beschrieben worden ist ein.

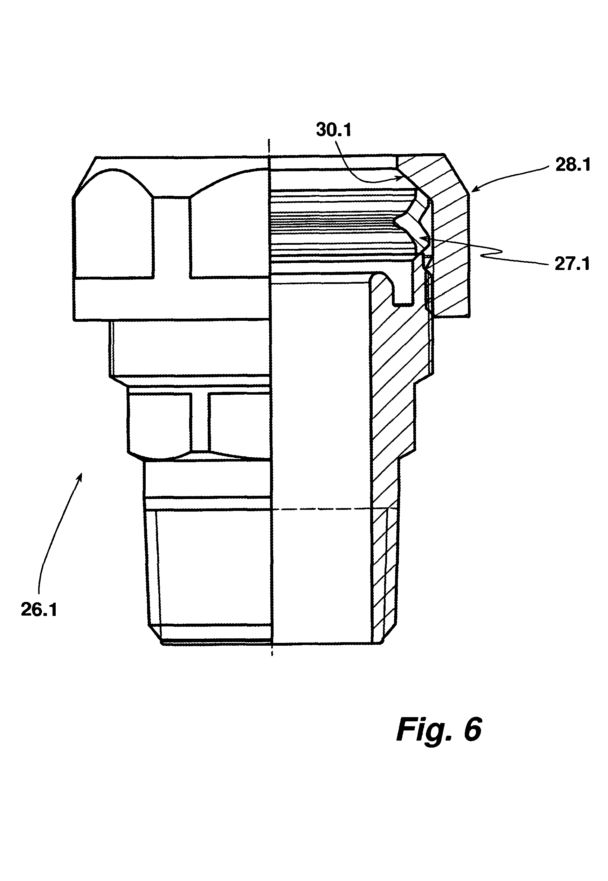

Eine weitere Wellrohranschlussverschraubung 26.1 ist in Figur 6 gezeigt. Die Wellrohranschlussverschraubung 26.1 entspricht derjenigen des Ausführungsbeispiels der Figur 5 mit dem Unterschied, dass die geneigte Stellfläche 30.1 der Überwurfmutter 28.1 bis zu dem wellrohrseitigen Durchbruch fortgesetzt ist, mithin ein nach innen vorspringender Flansch nicht vorgesehen ist. Bei dieser Ausgestaltung wird durch die Anlageanordnung des Klemmringes 27.1 aufgrund der Neigung der Stellfläche 30.1 dieser beim Anschrauben der Überwurfmutter 30.1 mit radialen Kräften beaufschlagt.

Bei den dargestellten Ausführungsbeispielen sind die Grundkörper, die Klemmringe sowie die Überwurfmuttern aus einer Messinglegierung hergestellt.

Die Erfindung ist anhand eines Ausführungsbeispiels beschrieben worden. Ohne den Umfang der Ansprüche zu verlassen, ergeben sich für einen Fachmann zahlreiche weitere Ausgestaltungen, die Erfindung verwirklichen zu können, ohne dass dieses im Einzelnen dargelegt werden müsste.

### Bezugszeichenliste

- 1: Wellrohranschlussverschraubung
- 2: Grundkörper
- 3: Klemmring
- 4: Überwurfmutter
- 5: Wellrohr
- 6: Außengewinde
- 7: Klemmringkammer
- 8: Innengewinde
- 9: Mitnehmer
- 10: Seite
- 11: Seite
- 12: Anschlagfläche
- 13: Klemmfläche
- 14: Flächenabschnitt
- 15: Stellfläche
- 16: Anschluss
- 17: Klemmfläche
- 18: Durchgangskanal
- 19: Mündungsvorsprung
- 20: Stellkörper
- 21: Klemmringnut
- 22: Anschlagfläche
- 23: Widerlagerfläche
- 24: Scheitel
- 25: Tal
- 26, 26.1: Wellrohranschlussverschraubung
- 27, 27.1: Klemmring
- 28, 28.1: Überwurfmutter
- 29: Klemmfläche
- 30, 30.1: Stellfläche
- 31: Flansch
- 32: Klemmringnut
- 33: Stellkörper

- K: Krafteinleitungsrichtung
- S: Schlitz

## Patentansprüche

1. Wellrohranschlussverschraubung, umfassend einen Grundkörper (2) mit einem wellrohrseitigem Anschluss (16) und einen durch eine Spanneinrichtung (4, 28) gegenüber dem Grundkörper (2) einrichtbaren Klemmring (3, 27), ausgestattet mit zumindest einem zum Anschließen eines Wellrohres (5) in ein Wellental (25) desselben eingreifenden Mitnehmer (9), wobei der wellrohrseitige Anschluss (16) des Grundkörpers (2) eine erste ringförmige Klemmfläche (17) und der Klemmring (3) eine zum Zusammenwirken mit dieser ersten Klemmfläche (17) angeordnete zweite Klemmfläche (13, 29) aufweist und beide Klemmflächen (13, 17; 29) angeordnet sind, damit ein zwischen diesen angeordneter Scheitel (24) eines Wellrohres (5) bei dem Vorgang des Anschließens des Wellrohres (5) an den Grundkörper (2) zusammengedrückt wird, wobei die Klemmfläche (17) des Grundkörpers (2) Teil eines einen Durchgangskanal (18) einfassenden Mündungsvorsprunges (19) ist, wobei die Klemmfläche (17) zur Längsachse des Grundkörpers (2) geneigt ist und sich an einer nach außen weisenden Seite des Mündungsvorsprunges (19) befindet und wobei der Grundkörper (2) konzentrisch zu der Längsachse seiner Klemmfläche (17) unter Belassung einer Klemmringnut (21) einen ringförmigen Stellkörper (20) mit einer vorderen Anschlagfläche (22) für den Klemmring (3, 27) und mit einer Widerlagerfläche (23) aufweist, an der sich der Klemmring (3, 27), wenn mit seinem vorderen Endabschnitt in die Klemmringnut (21) eingeführt, mit einem Abschnitt seiner Außenseite (11) abstützt, **dadurch gekennzeichnet, dass** die Klemmfläche (13, 29) des Klemmringes (3, 27) in Richtung zum Grundkörper (2) hin bei in ein Wellental (25) des Wellrohres (5) eingreifendem Mitnehmer (9) den in Richtung zum Grundkörper (2) an das Wellental (25) anschließenden Scheitel (24) übergreift und der vordere, zum Grundkörper (2) weisende Abschluss des Klemmringes (3, 27) eine geringere Breite aufweist als die lichte Weite der Öffnung der Klemmringnut (21).

2. Wellrohranschlussverschraubung nach Anspruch 1, **dadurch gekennzeichnet, dass** der Klemmring (3, 27) mit seinem zum Grundkörper (2) weisenden Abschnitt in diese Richtung verjüngt ist.

3. Wellrohranschlussverschraubung nach Anspruch 1 oder 2, **dadurch gekennzeichnet, dass** die Klemmringnut (21) zumindest in einem ersten, von ihrer Mündung ausgehenden Abschnitt konisch verjüngt ist und zu diesem Zweck das Widerlager (23) des Stellkörpers (20) gegenüber der Längsachse des Grundkörpers (2) entsprechend geneigt ist.

4. Wellrohranschlussverschraubung nach einem der Ansprüche 1 bis 3, **dadurch gekennzeichnet, dass** der Klemmring (3, 27) ein einfach geschlitzter Ringkörper ist.

5. Wellrohranschlussverschraubung nach Anspruch 4, **dadurch gekennzeichnet, dass** die Weite des Schlitzes (S) des Klemmringes (3, 27) so bemessen ist, dass bei bestimmungsgemäß an den Grundkörper (2) angeschlossenem Wellrohr (5) der Schlitz (S) vollständig oder zumindest weitgehend vollständig geschlossen ist.

6. Wellrohranschlussverschraubung nach einem der Ansprüche 1 bis 5, **dadurch gekennzeichnet, dass** als Spanneinrichtung eine Überwurfmutter (4) zum Aufschrauben auf ein außenseitig am Grundkörper (2) konzentrisch zu der Längsachse seiner Klemmfläche (17) angeordnetes Gewinde (6) vorgesehen ist und innerhalb der Überwurfmutter (4) eine Klemmringkammer (7) zur unverlierbaren Aufnahme des Klemmringes (3) angeordnet ist.

7. Wellrohranschlussverschraubung nach Anspruch 6, **dadurch gekennzeichnet, dass** der Klemmring (3) eine in Richtung zum Grundkörper (2) weisende Anschlagfläche (12) zum Zusammenwirken mit dem Anschlag (22) des Grundkörpers (2) aufweist.

8. Wellrohranschlussverschraubung nach Anspruch 7, **dadurch gekennzeichnet, dass** die Klemmringkammer (7) in Richtung zum Wellrohr (5) durch eine sich zum wellrohrseitigen Ausgang der Spanneinrichtung (4) verjüngte Stellfläche (15) begrenzt ist.

## Claims

1. Screw connection for corrugated pipe, comprising a main body (2) with a connector (16) on the corrugated pipe side and a clamping ring (3, 27) which can be installed relative to the main body (2) by means of a tightening device (4, 28), said clamping ring being equipped with at least one dog (9) which, in order to connect a corrugated pipe (5), engages in a trough (25) thereof, wherein the connector (16) on the corrugated pipe side of the main body (2) has a first annular clamping face (17) and the clamping ring (3) has a second clamping face (13, 29) which is arranged so as to cooperate with this first clamping face (17), and the two clamping faces (13, 17; 29) are arranged so that a peak (24) arranged therebetween of a corrugated pipe (5) is compressed during the process of connecting the corrugated pipe (5) to the main body (2), wherein the clamping face (17) of the main body (2) is part of a mouth protrusion (19) surrounding a through-channel (18), wherein the clamping face (17) is inclined with respect to the longitudinal axis of the main body (2) and is located on an outwardly facing side of the mouth protrusion (19), and wherein the main body (2) has, concentric to the longitudinal axis of its clamping face (17) so as to form a clamping ring groove (21), an annular adjusting body (20) with a front stop face (22) for the clamping ring (3, 27) and with an abutment face (23) against which the clamping ring (3, 27) rests with a portion of its outer side (11) when it is introduced with its front end portion into the clamping ring groove (21), **characterised in that** the clamping face (13, 29) of the clamping ring (3, 27), in the direction towards the main body (2) with the dog (9) engaging in a trough (25) of the corrugated pipe (5), engages over the peak (24) adjacent to the trough (25) in the direction of the main body (2), and the front end of the clamping ring (3, 27) facing towards the main body (2) has a width smaller than the clear width of the opening of the clamping ring groove (21).

2. Screw connection for corrugated pipe, according to claim 1, **characterised in that** the clamping ring (3, 27) tapers in the direction of the main body (2) with its portion facing towards the latter.

3. Screw connection for corrugated pipe, according to claim 1 or 2, **characterised in that** the clamping ring groove (21) tapers conically at least in a first portion proceeding from the mouth thereof, and to this end the abutment (23) of the adjusting body (20) is accordingly inclined relative to the longitudinal axis of the main body (2).

4. Screw connection for corrugated pipe, according to any one of claims 1 to 3, **characterised in that** the clamping ring (3, 27) is an annular body with a single slot.

5. Screw connection for corrugated pipe, according to claim 4, **characterised in that** the width of the slot (S) of the clamping ring (3, 27) is dimensioned such that, when the corrugated pipe (5) is connected to the main body (2) as intended, the slot (S) is fully or at least largely fully closed.

6. Screw connection for corrugated pipe, according to any one of claims 1 to 5, **characterised in that** provided as the tightening device is a union nut (4) for screwing onto a thread (6) which is arranged externally on the main body (2) and concentric to the longitudinal axis of the clamping face (17) thereof, and a clamping ring chamber (7) for captively accommodating the clamping ring (3) is arranged within the union nut (4).

7. Screw connection for corrugated pipe, according to claim 6, **characterised in that** the clamping ring (3) has a stop face (12) facing in the direction of the main body (2) for cooperating with the stop (22) of the main body (2).

8. Screw connection for corrugated pipe, according to claim 7, **characterised in that** the clamping ring chamber (7) is delimited in the direction of the corrugated pipe (5) by an adjusting face (15) which tapers towards the outlet of the tightening device (4) on the corrugated pipe side.

## Revendications

1. Raccord à vis pour tuyau ondulé comprenant un corps de base (2) avec un raccord (16) du côté du tuyau ondulé et une bague de serrage (3, 27) ajustable par rapport au corps de base (2) au moyen d'un dispositif de serrage (4, 28), équipé d'au moins un toc d'entraînement (9), s'engageant, afin de raccorder un tuyau ondulé (5) dans un creux d'onde (25) de ce dernier, le raccord (16) du côté du tuyau ondulé du corps de base (2) présentant une première surface de serrage (17) de forme annulaire et la bague de serrage (3), une seconde surface de serrage (13, 29), disposée afin d'agir conjointement avec cette première surface de serrage (17) et les deux surfaces de serrage (13, 17 ; 29) étant disposées de façon à ce qu'un sommet (24) d'un tuyau ondulé (5) positionné entre ces dernières soit compressé lors du processus de raccordement du tuyau ondulé (5) au corps de base (2), la surface de serrage (17) du corps de base (2) faisant partie d'une avancée terminale (19) entourant un canal de passage (18), la surface de serrage (17) étant inclinée par rapport à l'axe longitudinal du corps de base (2) et se trouvant sur un côté de l'avancée terminale (19) orienté vers l'extérieur et le corps de base (2) présentant, disposé de façon concentrique par rapport à l'axe longitudinal de sa surface de serrage (17), tout en laissant une rainure annulaire de serrage (21 ), un corps de réglage (20) annulaire muni d'une surface de butée avant (22) pour la bague de serrage (3, 27) et une surface de contre-butée (23) sur laquelle s'appuie la bague de serrage (3, 27) par un tronçon de sa face extérieure (11), lorsqu'elle est introduite par son tronçon d'extrémité avant dans la rainure de serrage (21) **caractérisé en ce que** la surface de serrage (13, 29) de la bague de serrage (3, 27) s'engage en direction du corps de base (2), quand le toc d'entraînement (9) s'engage dans un creux d'onde (25) du tuyau ondulé (5), par-dessus le sommet (24) qui suit le creux d'onde (25) dans le sens du corps de base (2) et l'extrémité avant, orientée vers le corps de base (2), de la bague de serrage (3, 27) présente une largeur inférieure à la largeur du clair de l'ouverture de la rainure (21) de la bague de serrage.

2. Raccord à vis pour tuyau ondulé selon la revendication 1, **caractérisé en ce que** la bague de serrage (3, 27) avec son tronçon orienté vers le corps de base (2) est rétrécie dans ce sens.

3. Raccord à vis pour tuyau ondulé selon la revendication 1 ou 2, **caractérisé en ce que** la rainure (21) de la bague de serrage est rétrécie coniquement au moins dans un premier tronçon qui part de son extrémité et qu'à cet effet, la contre-butée (23) du corps de réglage (20) est inclinée de façon correspondante par rapport à l'axe longitudinal du corps de base (2).

4. Raccord à vis pour tuyau ondulé selon l'une des revendications 1 à 3, **caractérisé en ce que** la bague de serrage (3, 27) est un simple corps annulaire à fente.

5. Raccord à vis pour tuyau ondulé selon la revendication 4, **caractérisé en ce que** la largueur de la fente (S) de la bague de serrage (3, 27) est dimensionnée de telle sorte que si un tuyau ondulé (5) est raccordé au corps de base (2) conformément à sa destination, la fente (S) est complètement ou du moins majoritairement fermée.

6. Raccord à vis pour tuyau ondulé selon l'une des revendications 1 à 5, **caractérisé en ce qu'**un écrou-raccord (4) faisant office de dispositif de serrage est prévu pour être vissé sur un filet (6) disposé de façon concentrique par rapport à l'axe longitudinal de sa surface de serrage (17), sur le corps de base (2), sur la face extérieure, et qu'à l'intérieur de l'écrou-raccord (4) est disposée une chambre de serrage (7) dans laquelle sera logée de façon imperdable la bague de serrage (3).

7. Raccord à vis pour tuyau ondulé selon la revendication 6, **caractérisé en ce que** la bague de serrage (3) présente une surface de butée (12) orientée vers le corps de base (2) afin d'agir conjointement avec la butée (22) du corps de base (2).

8. Raccord à vis pour tuyau ondulé selon la revendication 7, **caractérisé en ce que** la chambre de serrage (7) est limitée dans le sens orienté vers le tuyau ondulé (5) par une surface de réglage (15) qui se rétrécit vers la sortie du dispositif de serrage (4) du côté tuyau ondulé.
